(19) Europäisches Patentamt
European Patent Office
Office européen des brevets

(11) **EP 2 929 400 B1**

(12) **FASCICULE DE BREVET EUROPEEN**

(45) Date de publication et mention
de la délivrance du brevet:
**28.12.2016 Bulletin 2016/52**

(21) Numéro de dépôt: **13821865.6**

(22) Date de dépôt: **06.12.2013**

(51) Int Cl.:
***G05B 19/416*** *(2006.01)*

(86) Numéro de dépôt international:
**PCT/FR2013/052988**

(87) Numéro de publication internationale:
**WO 2014/087115 (12.06.2014 Gazette 2014/24)**

(54) **PROCÉDÉ DE CONTRÔLE D'UN ROBOT DE PERÇAGE ET ROBOT DE PERÇAGE METTANT EN OEUVRE LE PROCÉDÉ**

VERFAHREN ZUR STEUERUNG EINES BOHRROBOTERS UND BOHR ROBOTER ZUR DURCHFÜHRUNG DES VERFAHRENS

METHOD FOR CONTROLLING A DRILLING ROBOT, AND DRILLING ROBOT IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2012 FR 1261766**

(43) Date de publication de la demande:
**14.10.2015 Bulletin 2015/42**

(73) Titulaire: **Aircelle**
**76700 Gonfreville L'Orcher (FR)**

(72) Inventeurs:
• **COIN, Maxime**
**F-27210 Boulleville (FR)**
• **RAMAGE, Denis**
**F-76280 Heuqueville (FR)**

(74) Mandataire: **Gaillarde, Frédéric F. Ch. et al**
**Cabinet Germain & Maureau**
**31-33, rue de la Baume**
**75008 Paris (FR)**

(56) Documents cités:
**US-A1- 2006 116 786**

**Description**

La présente invention concerne un procédé de contrôle d'un robot de perçage. Elle concerne aussi un robot de perçage pour mettre en oeuvre le procédé.

Dans l'état de la technique, tel que décrit dans le document US 2006/0116786, on a déjà programmé des robots de perçage qui permettent notamment de réaliser des séries de perçage à l'aide de forets. L'outil de perçage est monté à l'extrémité d'un bras articulé, par exemple à six degrés de liberté. Chaque axe est équipé d'un actionneur qui permet de déplacer l'extrémité du bras dans une position et une orientation déterminées. Il en résulte que l'outil de perçage peut être approché selon une orientation déterminée dans chaque position programmée d'une séquence de perçages exécutée selon un programme déterminé.

Ainsi, en réponse au programme de perçage qui est enregistré et exécuté sur le dispositif de contrôle du robot perceur, l'outil de perçage solidaire de l'extrémité du bras du robot subit une accélération positive, puis une accélération négative (freinage) lors de l'approche de la position de perçage suivante. Lorsque l'outil de perçage est enfin arrêté, il peut s'établir un régime instable, l'outil se mettant à osciller autour de la position de perçage atteinte. Cette instabilité dépend de divers facteurs comprenant l'accélération d'approche, l'inertie du bras de robot et d'autres encore.

Si le perçage était commandé dès la détection de l'arrêt de l'extrémité, le perçage serait entièrement défectueux, avec une forme non cylindrique et une section ovalisée.

Pour remédier à cet inconvénient, il est connu de compter une période d'inhibition du perçage à compter de la détection de l'arrêt sur une position de perçage de façon à garantir que les inerties et autres forces de freinage des oscillations instables aient absorbées l'instabilité. On choisit la plus longue période de stabilisation naturelle prévue dans l'ensemble des mouvements programmés pour réaliser le programme de perçage.

Dans un exemple de réalisation, la période d'inhibition du perçage a été établie à 2,5 sec.

Mais, on s'est aperçu que pour l'ensemble des positions programmées, si aucune période de stabilisation n'est plus longue par définition, un nombre important de périodes de stabilisation étaient plus courtes que la durée d'inhibition retenue. Il existe donc une perte de temps lors de l'exécution du programme de perçages.

Par ailleurs, on s'est aperçu que, lors de l'exécution du perçage, à cause de nombreux paramètres, comprenant l'irrégularité de la matière de la pièce à percer, des défauts d'équilibrage ou d'usure du foret de perçage, et d'autres encore, un régime instable pouvait encore apparaître sur l'outil de perçage. Parmi les inconvénients de ces instabilités, on peut citer l'ovalisation du et des problèmes de délaminage.

Un premier objet de l'invention est de réduire notablement la durée de l'exécution complète du programme de perçage en contrôlant la stabilité de l'outil de perçage de façon à réduire au strict nécessaire la période d'inhibition avant chaque perçage.

Un autre objet de l'invention est de réduire les effets négatifs de l'instabilité à l'arrêt de l'outil de perçage.

A cette fin, la présente invention concerne un procédé de contrôle d'un robot de perçage. Le robot de perçage est du type comportant une structure mécanique pilotée permettant de placer un outil de perçage dans une séquence de perçages programmée en position et orientation du perçage d'une pièce comme une peau technique.

L'invention se caractérise en ce que le procédé comporte une étape de détermination de l'accélération de l'outil de perçage à la fin de l'approche sur une position de perçage. Lorsqu'une condition de stabilisation de l'outil de perçage est établie, une autorisation de perçage est générée.

Selon d'autres caractéristiques, la présente invention concerne aussi :

la condition logique de stabilisation comprend la prise en compte des mesures instantanées d'au moins une composante du vecteur accélération ;

le test de la condition logique de stabilisation comporte la comparaison d'au moins une valeur des mesures instantanées d'au moins une composante du vecteur accélération à une valeur de seuil prédéterminée ;

le test d'une condition de stabilisation de l'outil de perçage est combiné avec le déroulement d'une période préprogrammée ;

l'étape de détermination de l'accélération de l'outil de perçage à la fin de l'approche sur une position de perçage est poursuivie après l'autorisation de perçage de façon à réaliser une analyse des données de mesure de l'accéléromètre, puis à exploiter les données d'analyse en temps réel pour déclencher sur le robot de perçage et/ou sur l'outil de perçage une action corrective comme un arrêt de cycle de perçage, ou en différé en réalisant un fichier de données de mesure de l'accélération mesurée associé à chaque position de perçage de façon à fournir des moyens de traçabilité de l'opération de perçage en référence à chaque position programmée de perçage.

l'une des composantes mesurées de l'accéléromètre est établie selon l'axe du foret de perçage et en ce que la mesure des composantes selon les deux autres composantes du vecteur accélération sont testées dans une condition logique de qualité de perçage pour détecter une ovalisation du perçage programmé.

la condition logique de qualité de perçage comprend la comparaison de composantes de l'accélération mesurée à une table d'accélérations limite.

L'invention concerne aussi un robot de perçage mettant en oeuvre le procédé de contrôle de perçage de l'invention. Il comporte un accéléromètre solidaire de l'extrémité d'une structure de mobilisation d'un outil de perçage, l'accéléromètre étant connecté à des moyens de mesure, de suivi et de test d'une condition logique de stabilisation sur une séquence de positions de perçage préprogrammées dans une mémoire associée à un calculateur de commande du robot de perçage.

Selon d'autres caractéristiques :

l'accéléromètre est solidaire de l'extrémité d'une structure de mobilisation d'un outil de perçage de sorte qu'une composante de l'accélération mesurée est alignée avec l'axe d'un foret de perçage ;
le robot de perçage comporte un moyen d'enregistrement des données de qualité du perçage, produites sur la base de la comparaison de données de mesure de l'accéléromètre à une table de valeurs de comparaison, dans un fichier de traçabilité de perçage en association avec la position du perçage.

D'autres caractéristiques et avantages de la présente invention seront mieux compris à l'aide de la description et des Figures annexées parmi lesquelles :

- La Figure 1 est un schéma d'un robot de perçage adapté à mettre en oeuvre le procédé de l'invention ;
- La Figure 2 est un chronogramme de signaux générés lors du procédé de contrôle dans un mode de réalisation de l'invention ;
- La Figure 3 est un chronogramme de signaux générés lors du procédé de contrôle dans un autre mode de réalisation de l'invention ;
- La Figure 4 est un schéma bloc d'un dispositif de contrôle d'un robot perceur d'un mode de réalisation de l'invention ;
- La Figure 5 est un schéma bloc d'une variante d'un partie du dispositif de contrôle d'un robot perceur du mode de réalisation de la Figure 4 ;
- La Figure 6 est un schéma pour expliquer un autre mode de réalisation du procédé de l'invention ;
- La Figure 7 est un chronogramme de signaux générés lors du procédé de contrôle dans un autre mode de réalisation de l'invention ;
- La Figure 8 est un schéma bloc d'un dispositif de contrôle d'un robot perceur d'un autre mode de réalisation de l'invention.

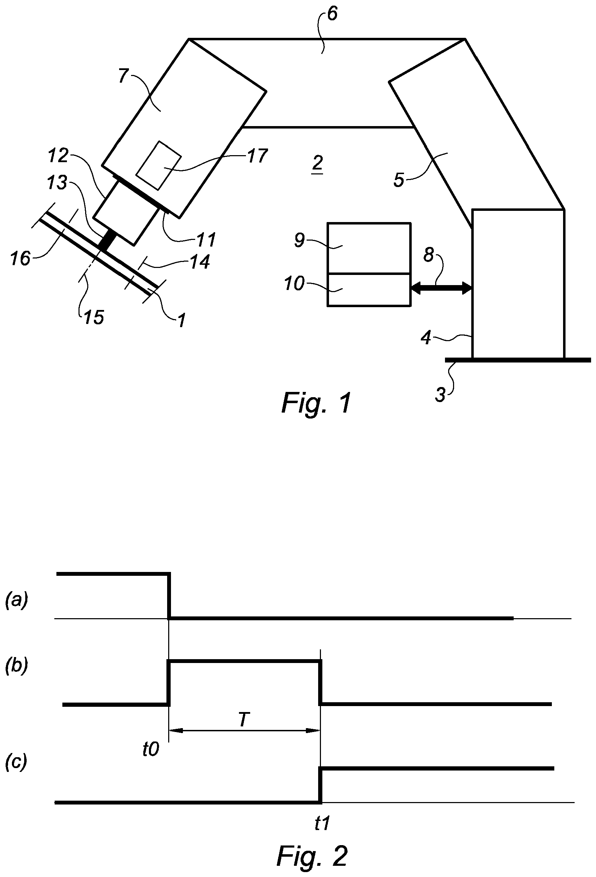

La Figure 1 représente un robot de perçage qui comporte une structure mobile dont une extrémité 7 porte un outil de perçage 12 sur lequel un foret de perçage 13 est monté. La tête de perçage 12 peut également porter plusieurs forets 13. Préférentiellement, la structure mobile est composée de plusieurs bras articulés 4-7 dont une extrémité est fixée en 3.

Les mouvements de l'extrémité du bras articulé 4-7 sont exécutés à l'aide d'actionneurs contrôlés par un ordinateur 10 connecté au robot proprement dit par une liaison 8. L'ordinateur 10 exécute un programme de perçage pré établi et enregistré dans une mémoire de programmes 9 associée au calculateur 10. Le programme de perçage permet de déplacer l'outil de perçage sur une suite déterminée de points ou positions de perçage 14 - 16 sur une pièce à percer 1, comme une peau technique.

A la Figure 2, on a représenté un chronogramme de signaux générés lors du procédé de contrôle dans un mode de réalisation de l'invention. Selon le procédé de l'invention, lorsque le programme de perçage détermine un arrêt (signal (a) - Figure 2) du mouvement de l'extrémité de la structure mobile 4-7 du robot parce qu'une nouvelle position de perçage vient d'être atteinte, on exécute une étape de détermination de l'accélération de l'outil de perçage à la fin de l'approche sur une position de perçage (signal (b) - Figure 2) qui prend une durée variable T comptée à partir de la date t0 d'arrêt du robot. Lorsqu'une condition de stabilité de l'outil de perçage est établie (date t1), une autorisation de perçage est générée (signal (c) - Figure 2).

Afin d'exécuter l'étape de détermination de l'accélération de l'outil de perçage à la fin de l'approche sur une position de perçage, on dispose un accéléromètre 17 sur l'extrémité 7 de la structure mobile 4-7 du robot de perçage. Préférentiellement, on utilise un accéléromètre produisant une mesure tridimensionnelle. Dans un mode de réalisation, l'une des directions de mesure de l'accélération est alignée avec une direction de référence de l'outil de perçage 12. Préférentiellement, on choisit l'axe du foret de perçage 13.

Lors de l'étape de détection d'une condition de stabilité de l'outil de perçage sur le robot de perçage, on exécute un test d'une condition logique CL prédéterminée fonction des valeurs mesurées (Ax, Ay, Az) de l'accélération de la forme :

$$CL(Ax, Ay, Az)$$

qui prend la valeur vraie ou fausse. Dans un exemple de réalisation, la condition logique prédéterminée CL calcule à chaque instant t après la date t0 la plus grande valeur absolue des trois signaux de mesure (Ax, Ay, Az) selon les trois directions du trièdre de référence de l'espace 3D mesurées de l'accéléromètre. Puis elle compare cette valeur à une valeur de seuil Sa. La condition logique CL prédéterminée est alors de la forme :

$$CL = (\max(|Ax|, |Ay|, |Az|) < Sa)$$

Lorsque la condition logique de stabilisation CL n'est pas vérifiée, la mesure de l'accélération est reprise et un nouveau test de la condition de stabilité CL est repris sur la base de la nouvelle mesure de l'accélération.
On note que l'accéléromètre est en pratique réalisé sur la base d'un capteur dont la sensibilité à l'accélération est maximale dans une direction privilégiée et décroît plus ou moins fortement quand on s'écarte de cette direction privilégiée. Pour améliorer la sensibilité d'ensemble de l'accéléromètre, pour mesurer une composante Ax, Ay ou Az du vecteur accélération selon chacune des trois directions x, y, z du trièdre de référence de l'espace 3D, plusieurs capteurs ayant chacune une direction privilégiée de meilleure sensibilité sont associés dans l'accéléromètre pour produire chacune des trois composantes Ax Ay, Az du vecteur accélération avec une sensibilité améliorée.

Lorsque la condition logique de stabilisation CL est vérifiée, le signal (b) (Figure 2) retombe à la date t1, après une durée T variable de stabilisation de la structure mobile du robot de perçage. Cette descente du signal (b) produit (signal (c) - Figure 2) une activation d'un signal d'autorisation de l'opération de perçage, le foret 13 de l'outil de perçage entre en rotation et prenant un mouvement d'avance le long de son axe de rotation exécute le perçage dans la position programmée sur la pièce 1. Cet axe de perçage définit un axe W constituant un 7$^{ème}$ axe du robot. On est alors garanti d'une parfaite stabilité de l'outil de perçage 12 et dans un temps T variable qui est presque toujours inférieur à la période bloquée de stabilisation appliquée à l'aveugle dans l'état de la technique. Il en résulte une réduction de la durée complète du cycle de perçage et donc une amélioration de la productivité du robot de perçage.

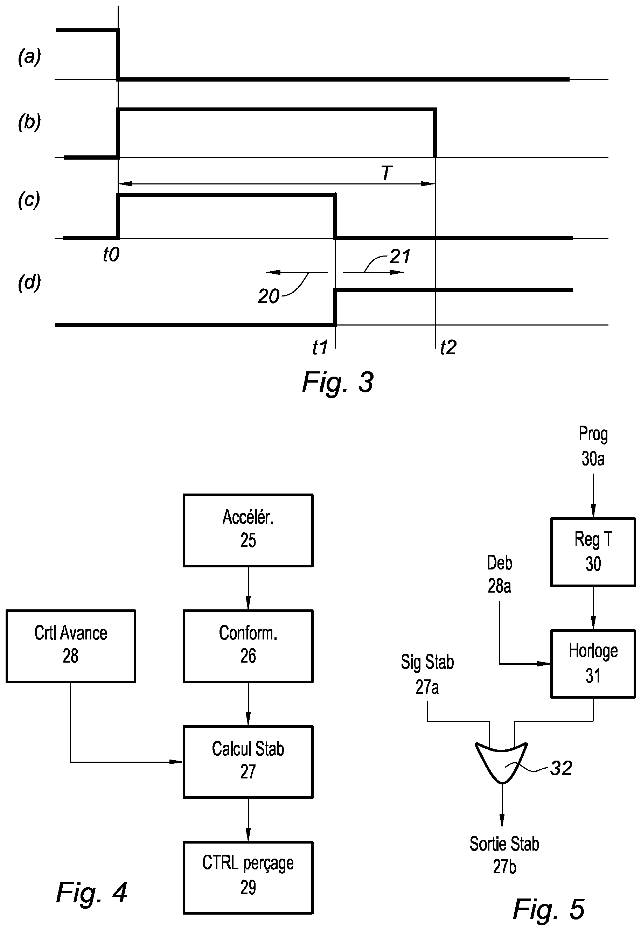

A la Figure 3, on a représenté un chronogramme exécuté dans une autre mode de réalisation du procédé de contrôle de l'invention. Le chronogramme de la Figure 3 diffère de celui de la Figure 2 en ce qu'une horloge (signal (b) - Figure 3), déclenchée à la date t0 déterminée par la fin du mouvement d'approche exécuté par la structure mobile du robot (signal (a) - Figure 3) déroule une période T déterminée permettant d'interrompre le test de la condition logique CL de stabilisation (signal (c) - Figure 3) décrite dans le mode de réalisation de la Figure 2.

En effet, la condition de stabilisation de l'extrémité de la structure mobile qui porte l'outil de perçage 12 (Figure 1) est vérifiée à une date t1 d'autorisation de l'opération de perçage (signal (d) - Figure 3) qui peut être plus tardive (flèche 21) ou plus tôt (flèche 20) selon les circonstances du mouvement d'approche de l'outil de perçage 12. Si l'établissement de la condition de stabilisation CL prend un temps trop long T, déterminé par l'horloge (signal (b) - Figure 3), le test de la condition logique de stabilisation de l'extrémité de la structure mobile du robot de perçage est interrompu et le signal d'activation de l'opération de perçage (signal (d) - Figure 3) passe à l'état haut et le perçage commence.

On évite ainsi la perte de temps entraînée par une condition de détection d'une accélération supérieure au seuil de la condition logique CL qui ne serait pas produite par un défaut de stabilisation de l'extrémité de la structure mobile du robot de perçage.

A la Figure 4, on a représenté sous forme de schéma bloc une implémentation du procédé de contrôle décrit à l'aide de la Figure 2. Les blocs représentés peuvent être réalisés sous diverses réalisations matérielles dans le calculateur 10 du robot de perçage, incluant des circuits électroniques ou une programmation de microcontrôleurs microprogrammés.

Un accéléromètre 25 est monté comme l'accéléromètre 17 du robot de perçage 2-13 de la Figure 1. Ses signaux de mesure sont transmis à un conformateur 26 de signaux de mesure et les signaux de mesure conformés de l'accélération instantanée sont transmis à un calculateur 27 d'une condition logique CL, définie plus haut à l'aide de la Figure 2.

Le calculateur 27 reçoit un signal, comme le signal (a), Figure 2 ou Figure 3, d'un circuit 28 de contrôle de l'avance de l'extrémité du robot de perçage porteuse de l'outil de perçage 12.

Lorsque la condition de stabilisation CL est vérifiée par le calculateur de stabilité 27, un signal comme le signal (c) Figure 2 d'autorisation de perçage est transmis à un circuit de contrôle du perçage 29.

A la Figure 5, on a représenté sous forme de schéma bloc une implémentation du procédé de contrôle décrit à l'aide de la Figure 4. L'implémentation de ce deuxième mode de réalisation reprend les blocs du mode de réalisation mais interpose le bloc de la Figure 5 entre les blocs 27 et 28 de la Figure 4.

Un registre T 30 reçoit par programmation 30a une valeur limite T de test de la condition de stabilisation CL testée au bloc 27 de la Figure 4. La valeur T est transmise à une première entrée d'une horloge ou compteur de temps 31 dont une seconde entrée 28a reçoit le signal de détection de fin de l'approche produit par le circuit 28 de contrôle d'avance précité (signal (a) - Figure 3). Le comptage de la durée T préprogrammée dans le registre T 30 est exécuté par l'horloge 31 dont la sortie (signal (b) - Figure 4) retombe à l'issue de la période T.

Les signaux de période T issu du circuit 31 et de condition logique CL de stabilisation issu du calculateur 27 de stabilisation sont fournis aux entrées d'une porte OU logique 32 qui produit une sortie 27b d'autorisation de perçage comme le signal (d) Figure 3 à l'entrée d'activation du circuit de contrôle de perçage 29 de la Figure 4.

Dans un troisième mode de réalisation du procédé de contrôle de l'invention, le suivi de la mesure instantanée de l'accélération est poursuivi pendant le perçage. Les données de mesure de l'accéléromètre sont alors analysées en amplitude dans le temps, en fréquences (transformée de Fourier) ou encore en temps-fréquence (transformée en ondelettes). Les données de résultat de l'analyse sont alors utilisées en temps réel pour déclencher sur le robot de perçage et/ou sur l'outil de perçage un action corrective comme un arrêt de cycle de l'opération de perçage, ou en différé en réalisant un fichier de données de mesure de l'accélération mesurée associé à chaque position de perçage de façon à fournir des moyens de traçabilité de l'opération de perçage en référence à chaque position programmée de perçage. Le fichier est alors enregistré au niveau du calculateur 10 de commande du robot 2-13 pour une exploitation ultérieure en association avec la pièce percée 1, l'outil de perçage 12 et le foret 13, et le programme 9 des positions programmées de perçage 14-16.

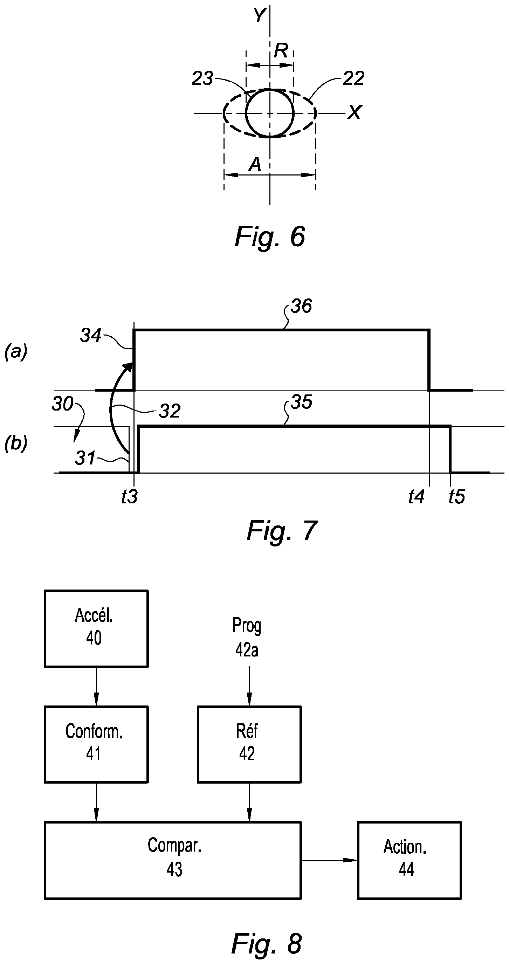

A la Figure 6, on a représenté un cas d'application de ce troisième mode de réalisation du procédé de contrôle de l'invention. On a représenté schématiquement un perçage 23 dans une position préprogrammée de perçage dans un repère XYZ associé au foret de perçage, les axes X et Y étant orientés dans le plan de la figure et l'axe Z sur la normale à ce plan le long de l'axe du foret. Le perçage idéal 23 en condition de stabilisation correcte est de section parfaitement circulaire. On peut alors enregistrer dans un fichier de traçabilité de perçage des données de stabilité correcte associées à la position du perçage 23.

Si la condition de stabilisation n'est pas correcte durant le perçage, le perçage est ovalisé en 22 selon l'axe X, avec une dimension A supérieure au diamètre R de la section circulaire du perçage idéal 23. Dans ce cas, l'accélération mesurée le long de l'axe X sur l'extrémité de la structure mobile 4-7 du robot de perçage est non nulle. Ces données de stabilité incorrecte sont alors enregistrées dans le fichier de traçabilité de perçage en association avec la position du perçage 23.

Le programme de perçage peut déterminer un taux d'ovalisation maximum O tel que le rapport A/R du perçage 22 réel au perçage 23 programmée doit être respecté. Par enregistrement de tables d'accélération limite SBX, SBY, dans les directions X et Y, et exécution d'un test d'une condition logique de qualité du perçage dépendant de la mesure de l'accélération et des données d'accélération limite, il est prévu de déclencher une action d'interdiction de la poursuite de l'opération de perçage dès que l'une des composantes AX ou AY mesurées sur l'accéléromètre (17, Figure 1) dépasse le seuil limite enregistré SBX ou SBY.

A la Figure 7, on a représenté un chronogramme de signaux de contrôle de ce troisième mode de réalisation du procédé de contrôle de l'invention. Le signal (a) de la Figure 7 représente une évolution temporelle du signal d'activation ou d'autorisation de perçage dans une position préprogrammée de perçage.

Le signal (b) de la Figure 7 représente l'évolution dans le temps de l'analyse des données de mesure de l'accéléromètre (17, Figure 1). Dans une première partie 30, on a testé la condition de stabilisation CL après approche de l'outil de perçage selon les premier ou deuxième modes de réalisation du procédé de contrôle de l'invention. Lorsque le test de la condition logique CL est favorable en 31, le signal (a) bascule en 34 pour donner l'autorisation de perçage et le test de la condition de stabilisation CL est terminé. Immédiatement après cet instant t3, dans une seconde partie 35 du signal (b), on a testé la condition logique de qualité du perçage décrite à l'aide de la Figure 5.

Si la condition logique de qualité de perçage est correcte, les données correspondantes de bonne qualité du perçage sont enregistrées dans le fichier de traçabilité de perçage en association avec la position du perçage 23.

Si la condition logique de qualité de perçage est incorrecte, le signal (a) d'autorisation de perçage retombe à la date t4 interrompant le perçage et les données correspondantes de défaut du perçage sont enregistrées dans le fichier de traçabilité de perçage en association avec la position du perçage 23.

Préférentiellement, la surveillance de l'accéléromètre est dans tous les cas poursuivie au delà de la date t4 d'arrêt du perçage et prolongée jusqu'à une date t5 préprogrammée pour surveiller le retrait du foret 13.

A la Figure 8, on a représenté une section du calculateur 10 du robot de perçage de l'invention dans laquelle est exécuté le procédé de perçage du mode de réalisation décrit à l'aide des Figures 6 est 7. L'accéléromètre 40 (analogue à l'accéléromètre 17 de la Figure 1) est connecté à un circuit 41 conformateur de signaux de mesure de l'accélération instantanée de l'extrémité de la structure mobile du robot perceur. Par programmation préalable en 42a on a réalisé l'enregistrement des tables d'accélération limite SBX, SBY, dans les directions X et Y dans un registre 42.

Les données du registre 42 et du conformateur 41 sont alors testées dans un comparateur de test 43 qui implémente la condition logique de qualité de perçage décrite à l'aide de la Figure 7. En fonction de la condition logique, un module d'action 44 exécute un enregistrement des données de qualité du perçage dans le fichier de traçabilité de perçage en association avec la position du perçage 23 et selon le cas un arrêt du perçage est généré.

**Revendications**

1. Procédé de contrôle d'un robot de perçage, du type comportant une structure mécanique pilotée (4- 7) permettant de placer un outil de perçage (12) dans une séquence de perçages (14-16) programmée (9) en position et orientation du perçage d'une pièce (1) comme une peau technique,
le procédé comportant les étapes suivantes:

   une étape de détermination de l'accélération (Ax, Ay, Az) de l'outil de perçage (12) à la fin de l'approche sur une position de perçage, puis de test d'une condition de stabilisation (CL) de l'outil de perçage (12) pour enfin établir une autorisation de perçage ((c), Figure 2 ; (d) Figure 3 ; (a) Figure 7) ;
   l'étape de détermination de l'accélération (Ax, Ay, Az) de l'outil de perçage (12) à la fin de l'approche sur une position de perçage étant poursuivie après l'autorisation de perçage ((a), Figure 7) de façon à réaliser une analyse des données de mesure de l'accéléromètre, puis à exploiter les données d'analyse en temps réel pour déclencher sur le robot de perçage et/ou sur l'outil de perçage un action corrective, telle qu'un arrêt de cycle.

2. Procédé de contrôle selon la revendication 1, **caractérisé en ce que** l'une des composantes mesurées de l'accéléromètre (Az) est établie selon l'axe du foret de perçage et **en ce que** la mesure des composantes selon les deux autres composantes du vecteur accélération (Ax, Ay) sont testées dans une condition logique de qualité de perçage pour détecter une ovalisation (22) du perçage (23) programmé.

3. Procédé de contrôle selon la revendication 2, **caractérisé en ce que** la condition logique de qualité de perçage comprend la comparaison de composantes (Ax, Ay) de l'accélération mesurée à une table d'accélérations limite (SBx, SBy).

4. Procédé de contrôle selon l'une des revendications 1 à 3, **caractérisé en ce que** les données d'analyse sont exploitées en différé en réalisant un fichier de données de mesure de l'accélération mesurée associé à chaque position de perçage de façon à fournir des moyens de traçabilité de l'opération de perçage en référence à chaque position programmée de perçage.

5. Procédé de contrôle selon l'une des revendications précédentes, **caractérisé en ce que** la condition logique de stabilisation CL comprend la prise en compte des mesures instantanées d'au moins une composante (Ax, Ay, Az) du vecteur accélération.

6. Procédé de contrôle selon l'une des revendications précédentes, **caractérisé en ce que** le test de la condition logique de stabilisation comporte la comparaison d'au moins une valeur des mesures instantanées d'au moins une composante (Ax, Ay, Az) du vecteur accélération à une valeur de seuil prédéterminée (Sa).

7. Procédé de contrôle selon l'une des revendications précédentes, **caractérisé en ce que** le test d'une condition de stabilisation (CL) de l'outil de perçage (12) est combiné (32) avec le déroulement d'une période préprogrammée (T ; 31).

8. Robot de perçage mettant en oeuvre le procédé de contrôle de perçage selon l'une des revendications précédentes, **caractérisé en ce qu'**il comporte un accéléromètre (17) solidaire de l'extrémité (7) d'une structure de mobilisation (4-7) d'un outil de perçage (12), l'accéléromètre (17) étant connecté à des moyens 25 - 29 ; 30 - 32 ; 40 - 44) de mesure, de suivi et de test d'une condition logique de stabilisation (CL) sur une séquence de positions de perçage (14-16) préprogrammées dans une mémoire (9) associée à un calculateur (10) de commande du robot de perçage.

9. Robot de perçage selon la revendication 8, **caractérisé en ce que** l'accéléromètre (17) est solidaire de l'extrémité (7) d'une structure de mobilisation (4-7) d'un outil de perçage (12) de sorte qu'une composante (Az) de l'accélération mesurée est alignée avec l'axe d'un foret de perçage (13).

10. Robot de perçage selon l'une quelconque des revendications 8 ou 9, **caractérisé en ce qu'**il comporte un moyen d'enregistrement des données de qualité du perçage, produites sur la base de la comparaison (43) de données de mesure de l'accéléromètre (17 ; 40) à une table de valeurs de comparaison (42), dans un fichier de traçabilité de perçage en association avec la position du perçage (23).

**Patentansprüche**

1. Kontrollverfahren für einen Bohrroboter, derart ausgeführt, dass er eine gesteuerte mechanische Struktur (4-7) umfasst, die den Einsatz eines Bohrwerkzeugs (12) in einer Ablaufkette von Bohrungen (14-16) ermöglicht, die hinsichtlich Position und Orientierung der Bohrung eines Werkstücks (1), wie einer technischen Hülle, programmiert (9) ist, wobei das Verfahren die folgenden Schritte umfasst:

einen Schritt zum Bestimmen der Beschleunigung (Ax, Ay, Az) des Bohrwerkzeugs (12) am Ende der Zustellung in eine Bohrposition, danach zum Testen einer Stabilisierungsbedingung (CL) des Bohrwerkzeugs (12), um schließlich eine Bohrfreigabe ((c), Abbildung 2; (d) Abbildung 3; (a) Abbildung 7) zu erteilen; wobei der Schritt zum Bestimmen der Beschleunigung (Ax, Ay, Az) des Bohrwerkzeugs (12) am Ende der Zustellung in eine Bohrposition nach der Bohrfreigabe ((a) Abbildung 7) fortgesetzt wird, um eine Analyse der Messdaten des Beschleunigungsmessers durchzuführen und danach die Analysedaten in Echtzeit zu verwerten, um am Bohrroboter und/ oder am Bohrwerkzeug eine Korrekturmaßnahme, wie einen Zyklusstopp, zu setzen.

2. Kontrollverfahren nach Anspruch 1, **dadurch gekennzeichnet, dass** eines der gemessenen Elemente des Beschleunigungsmessers (Az) gemäß der Achse des Bohrers erstellt wird, und dadurch, dass die Messung der Elemente gemäß den beiden anderen Elementen des Beschleunigungsvektors (Ax, Ay) in einer logischen Bedingung für die Bohrqualität getestet werden, um eine Unrundheit (22) der programmierten Bohrung (23) zu erkennen.

3. Kontrollverfahren nach Anspruch 2, **dadurch gekennzeichnet, dass** die logische Bedingung für die Bohrqualität den Vergleich von Elementen (Ax, Ay) der gemessenen Beschleunigung mit einer Tabelle mit Beschleunigungsgrenzwerten (SBx, SBy) umfasst.

4. Kontrollverfahren nach einem der Ansprüche 1 bis 3, **dadurch gekennzeichnet, dass** die Analysedaten zeitversetzt verwertet werden, indem man eine Datei mit Messdaten der gemessenen Beschleunigung in Verbindung mit jeder Bohrposition erstellt, um Mittel zur Rückverfolgung des Bohrvorganges in Bezug auf jede programmierte Bohrposition anzubieten.

5. Kontrollverfahren nach einem der vorherigen Ansprüche **dadurch gekennzeichnet, dass** die logische Bedingung zur Stabilisierung CL die Berücksichtigung der Momentanmessungen zumindest eines Elements (Ax, Ay, Az) des Beschleunigungsvektors umfasst.

6. Kontrollverfahren nach einem der vorherigen Ansprüche **dadurch gekennzeichnet, dass** der Test der logischen Bedingung zur Stabilisierung den Vergleich zumindest eines Werts der Momentanmessungen zumindest eines Elements (Ax, Ay, Az) des Beschleunigungsvektors mit einem vorbestimmten Grenzwert (Sa) umfasst.

7. Kontrollverfahren nach einem der vorherigen Ansprüche **dadurch gekennzeichnet, dass** der Test einer Bedingung zur Stabilisierung (CL) des Bohrwerkzeugs (12) mit dem Ablauf eines vorprogrammierten Zeitraums (T; 31) kombiniert (32) wird.

8. Bohrroboter, der das Kontrollverfahren zum Bohren nach einem der vorherigen Ansprüche anwendet, **dadurch gekennzeichnet, dass** er einen Beschleunigungsmesser (17) umfasst, der fest mit dem Ende (7) einer Mobilisierungsstruktur (4-7) eines Bohrwerkzeugs (12) verbunden ist, wobei der Beschleunigungsmesser (17) mit Mitteln (25-29; 30-32; 40-44) zum Messen, zum Überwachen und zum Testen einer logischen Bedingung zur Stabilisierung (CL) in einer Ablaufkette mit vorprogrammierten Bohrpositionen (14-16) in einem Speicher (9) verbunden ist, der einem Rechner (10) zum Steuern des Bohrroboters zugeordnet ist.

9. Bohrroboter nach Anspruch 8, **dadurch gekennzeichnet, dass** der Beschleunigungsmesser (17) fest mit dem Ende (7) einer Mobilisierungsstruktur (4-7) eines Bohrwerkzeugs (12) verbunden ist, sodass ein Element (Az) der gemessenen Beschleunigung mit der Achse eines Bohrers (13) angepasst wird.

10. Bohrroboter nach einem der Ansprüche 8 oder 9, **dadurch gekennzeichnet, dass** er ein Mittel zum Speichern der Bohrqualitätsdaten umfasst, die auf der Basis des Vergleichs (43) von Messdaten des Beschleunigungsmessers (17; 40) mit einer Tabelle an Vergleichswerten (42) in einer Datei zur Bohr-Rückverfolgung in Verbindung mit der Bohrposition (23) erzeugt werden.

## Claims

1. A method for controlling a drilling robot, of the type including a servo-driven mechanical structure (4-7) allowing placing a drilling tool (12) in a drilling sequence (14-16) programming (9) the position and orientation of the drilling of a part (1) such as a technical surface patch,
   the method including the following steps:

   a step of determining the acceleration (Ax, Ay, Az) of the drilling tool (12) at the end of the approach on a drilling position, and then testing a stabilization condition (CL) of the drilling tool (12), and finally establishing a drilling enable-command ((c), Figure 2; (d) Figure 3; (a) Figure 7);
   the step of determining the acceleration (Ax, Ay, Az) of the drilling tool (12) at the end of the approach on a drilling position being carried on after the drilling enable-command ((a), Figure 7) so as to carry out an analysis of the measurement data of the accelerometer, and then exploit the analysis data in real-time in order to trigger a corrective action, such as a cycle-stop command, on the drilling robot and/or on the drilling tool.

2. The control method according to claim 1, **characterized in that** one of the measured components of the accelerometer (Az) is established along the axis of the drill bit and **in that** the measurement of the components along the other two components of the acceleration vector (Ax, Ay) are tested in a drilling quality logical condition in order to detect an ovalization (22) of the programmed drilling (23).

3. The control method according to claim 2, **characterized in that** the drilling quality logical condition comprises the comparison of the components (Ax, Ay) of the measured acceleration with a table of limit accelerations (SBx, SBy).

4. The control method according to any of claims 1 to 3, **characterized in that** the analysis data are exploited in a deferred manner by realizing a measurement data file of the measured acceleration associated to each drilling position so as to provide means for tracing the drilling operation with reference to each programmed drilling position.

5. The control method according to any of the preceding claims, **characterized in that** the stabilization logical condition CL comprises the consideration of the instantaneous measurements of at least one component (Ax, Ay, Az) of the acceleration vector.

6. The control method according to any of the preceding claims, **characterized in that** the test of the stabilization logical condition includes the comparison of at least one value of the instantaneous measurements of at least one component (Ax, Ay, Az) of the acceleration vector with a predetermined threshold value (Sa).

7. The control method according to any of the preceding claims, **characterized in that** the test of the stabilization logical condition (CL) of the drilling tool (12) is combined (32) with the elapse of a pre-programmed period (T; 31).

8. A drilling robot implementing the drilling control method according to any of the preceding claims, **characterized in that** it includes an accelerometer (17) secured to the end (7) of a moving structure (4-7) of a drilling tool (12), the accelerometer (17) being connected to means (25-29; 30-32; 40-44) for measuring, monitoring and testing a stabilization logical condition (CL) on a sequence of drilling positions (14-16) pre-programmed in a memory (9) associated to a control calculator (10) of the drilling robot.

9. The drilling robot according to claim 8, **characterized in that** the accelerometer (17) is secured to the end (7) of a moving structure (4-7) of a drilling tool (12) so that a component (Az) of the measured acceleration is aligned with the axis of a drill bit (13).

10. The drilling robot according to any one of claims 8 or 9, **characterized in that** it includes a means for recording the drilling quality data, produced on the basis of the comparison (43) of the measurement data of the accelerometer (17; 40) with a table of comparison values (42), in a drilling traceability file in association with the drilling position (23).

Fig. 1

Fig. 2

(a)

(b)

T

(c)

t0

21

(d)

20

t1    t2

## Fig. 3

Accélér.
25

Crtl Avance
28

Conform.
26

Calcul Stab
27

CTRL perçage
29

## Fig. 4

Prog
30a

Reg T
30

Deb
28a

Sig Stab
27a

Horloge
31

32

Sortie Stab
27b

## Fig. 5

Fig. 6

Fig. 7

Fig. 8

**EP 2 929 400 B1**

**RÉFÉRENCES CITÉES DANS LA DESCRIPTION**

**Documents brevets cités dans la description**

- US 20060116786 A